(19) Europäisches Patentamt
European Patent Office
Office européen des brevets

(11) **EP 2 590 290 A1**

(12) **EUROPEAN PATENT APPLICATION**
published in accordance with Art. 153(4) EPC

(43) Date of publication:
08.05.2013 Bulletin 2013/19

(51) Int Cl.:
*H02J 3/32* (2006.01)     *H02J 3/46* (2006.01)

(21) Application number: 11800471.2

(22) Date of filing: 25.02.2011

(86) International application number:
PCT/JP2011/054301

(87) International publication number:
WO 2012/002001 (05.01.2012 Gazette 2012/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.07.2010 JP 2010151054

(71) Applicant: Hitachi, Ltd.
Chiyoda-ku
Tokyo 100-8280 (JP)

(72) Inventors:
• ISHIDA Takaharu
  Hitachi-shi, Ibaraki 319-1292 (JP)
• SASAKI Hiroto
  Hitachi-shi, Ibaraki 319-1292 (JP)

(74) Representative: Beetz & Partner
Patentanwälte
Steinsdorfstrasse 10
80538 München (DE)

(54) **POWER CONTROL METHOD, PROGRAM, AND POWER CONTROL DEVICE**

(57)     There is provided an electric power control apparatus in an electric power system (11) with power sources connected thereto, the power sources including a generator, and a storage cell, including a power aggregator (4) for selecting the power sources on the basis of a $CO_2$ origination amount. The power aggregator 4 includes a data collection unit (41) for receiving a selection condition of each of apparatuses collecting information via a setting screen on a display unit (46), thereby acquiring information including a voltage value, and a current value of each of the apparatuses in the electric power system, according to the selection condition, an electric power coloring unit (43) for computing of which power generator origin electric power stored in the storage cell is on the basis of the voltage value, the current value and admittance with respect to each of power sources, thereby computing a $CO_2$ origination amount obtained by multiplying the electric power for every power generator origins by a $CO_2$ emission coefficient preset by a power generation type, and a system control-apparatus computation unit (45) for displaying the $CO_2$ origination amount by the power source on the display unit (46).

F I G . 2

EP 2 590 290 A1

**Description**

Technical Field

The invention relates to an electric power control method, a program, and technology for an electric power control apparatus.

Background Art

In Patent Document 1, there are disclosed an electric power system control apparatus, and a method, using a secondary buttery, capable of implementing comprehensive control consolidating supply-demand control and transmission loss reduction control, by making effective use of the capacity of the secondary buttery, thereby enhancing a total control effect, a power-generation planning apparatus, a real-tine control apparatus, and an electric power control system. Further, in Patent Document 2, there are disclosed a transmission loss reduction system, and a method, using a secondary buttery system, capable of effectively controlling an electric power system by making sufficiently effective use of a reserve capacity on the part of a customer to thereby enable a power flow (effective power, reactive power) moving through a line to be directly reduced.

Citation List

Patent Literature

Patent Document 1: Japanese Unexamined Patent Application Publication No. 2008-67469
Patent Document 2: Japanese Unexamined Patent Application Publication No. 2008-48500

Summary of Invention

Technical Problem

In the case of technologies described in Patent Document 1, and Patent Document 2, respectively, an objective function represented by transmission loss reduction, minimization of generator fuel consumption characteristics, and reduction in $CO_2$ emission amount is minimized by finding system control such as system switchover and so forth by use of an optimization technique in order to control the electric power system. These technologies are put to use in such a way as to enhance efficiency on an individual generator basis from the standpoint of $CO_2$ emission reduction. Accordingly, the technologies do not necessarily contribute to $CO_2$ emission reduction for the electric power system as a whole. Further, a method for storing power in the secondary buttery to thereby reduce $CO_2$ emission as a whole is not adopted either.

The invention has been developed in view of the background described as above, and it is an object of the invention to select power sources on the basis of a $CO_2$ emission amount. Solution to Problem

To solve the problem, in accordance to one aspect of the invention, there is provided a method for controlling electric power of an electric power control apparatus in an electric power system with power sources connected thereto, the power sources including at least one power generator, and one storage cell, for selecting the power sources on the basis of a $CO_2$ origination amount representing information concerning a $CO_2$ emission amount, the electric power control apparatus comprising receiving a selection condition of each of apparatuses collecting information via a parameter setting screen on a display unit, thereby acquiring information including a voltage value, and a current value of each of the apparatuses in the electric power system, according to the selection condition, acquiring information including a voltage value, and a current value of each of the apparatuses in the electric power system, according to the selection condition, computing of which power generator origin electric power stored in the storage cell is on the basis of the voltage value, the current value and admittance with respect to each of power sources, computing a $CO_2$ origination amount obtained by multiplying the electric power for every power generator origins by a $CO_2$ origination (emission) coefficient preset by a power generation type and displaying the $CO_2$ origination amount by the power source on the display unit.

Other means for solution is described in connection with embodiments of the invention.

Advantageous Effects of Invention

With the present invention, a power source can be selected on the basis of a $CO_2$ origination amount. The above and other objects, features and advantages of the present invention will be apparent from the following detailed description of the preferred embodiments of the invention in conjunction with the accompanying drawings.

Brief Description of Drawings

Fig. 1 is a view showing an example of the configuration of an electric power system monitor-control system according to a first embodiment of the invention;
Fig. 2 is a view showing an example of the configuration of a power aggregator according to the first embodiment of the invention;
Fig. 3 is a view showing an example of a parameter-setting screen according to the first embodiment;
Fig. 4 is a view showing overall processing of an electric power system monitor-control method according to the first embodiment;
Fig. 5 is a view showing an example of transmission line - distribution line information;
Fig. 6 is a view showing an example of node parameter information;
Fig. 7 is a flow chart showing a procedure for an electric power coloring processing according to the first embodiment;
Fig. 8 is a schematic diagram of an electric power system;
Fig. 9 is a view showing $CO_2$ origination amount information according to the first embodiment;
Fig. 10 is view for describing a method for computing an optimum electricity output;
Fig. 11 is view showing an example of the configuration of a data center;
Fig. 12 is a view showing the configuration of an electric vehicle user analysis server;
Fig 13 is a view for describing the function of a data converter.
Fig. 14 is a view showing an example of the configuration of a power aggregator 4a according to a second embodiment of the invention;
Fig. 15 is a view showing an example of an electric power system grouping according to the second embodiment;
Fig. 16 is a flow chart showing a procedure for the power system grouping processing according to the second embodiment of the invention;
Fig. 17 is a schematic diagram showing the procedure for the power system grouping processing; and
Fig. 18 is a flow chart showing a procedure of a method for executing the electric power coloring processing by a group computed as a result of the processing of Fig. 16. Description of Embodiments

Next, preferred modes for carrying out the invention (hereinafter referred to as embodiments of the invention) are described in detail with reference to the accompanied drawings as appropriate.

(First Embodiment)

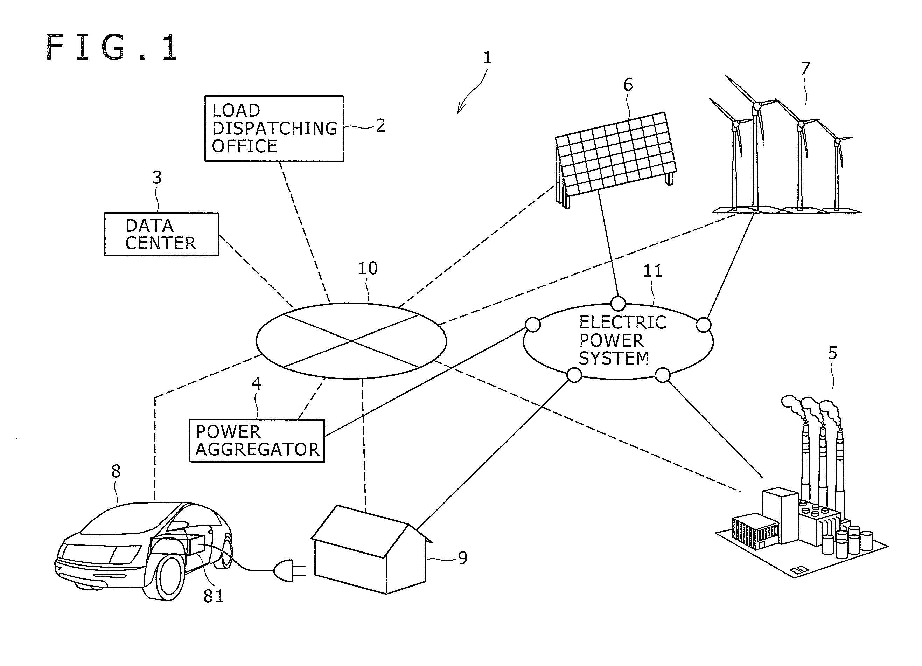

First, there is described hereinafter a first embodiment of the invention with reference to Figs. 1 to 13.

(System Configuration)

Fig. 1 is a view showing an example of the configuration of an electric power system monitor-control system according to the first embodiment of the invention. In Fig. 1, a broken line indicates a flow of information and a solid line indicates a flow of electric power.
The electric power system monitor-control system 1 includes a load dispatching office 2, a data center 3, a power aggregator (power controller) 4, a large-scale power-generation system 5 such as a thermal power station, or a nuclear power station, and so forth, a solar power-generation system 6, a wind power-generation system 7, an electric vehicle 8, a building 9 for use when the electric vehicle 8 to be charged is parked, and so forth. The load dispatching office 2, the data center 3, the power aggregator 4, the electric vehicle 8, and the building 9 among these constituents mutually exchange information by transmission/reception via a communications network 10.
Further, the power aggregator 4, the large-scale power-generation system 5, the solar power-generation system 6, the wind power-generation system 7, and so forth supply electric power to the building 9, and so forth via an electric power system 11.
The load dispatching office 2 is a center responsible for power supply, and power control in the jurisdiction thereof. The data center 3 is a center for managing data associated with the electric power system 11, the data including a history of electricity flow inside the electric power system 11, or performance histories of a variety of apparatuses, information on a contract with a user, and so forth. The data center 3 is further described later on. Information blocks, transmitted and received via the communications network 10, are transmitted to the data center 3, whereupon the information blocks received are converted by the data center 3 according to application in use, as described later on.

The power aggregator 4 is an apparatus serving as a decentralized power source, having a function for acquiring information on a storage cell 81 mounted in the electric vehicle 8 under a contract, and collecting a demand for power supply from the electric vehicle 8 as a target on the basis of power supply instructed from the load dispatching office 2, thereby instructing charge / discharge to the electric power system 11. In Fig. 1, one unit of the storage cell 81 is provided; however, a plurality of the storage cells 81 may be provided.

Further, the power aggregator 4 is an apparatus installed at a low order power control office, having a function for acquiring information blocks on respective electric power, and regarding the storage cell 81 mounted in the electric vehicle 8 as a decentralized power source, thereby executing administration of the storage cell 81, and instructing the control thereof. The power aggregator 4 is further described later on.

With the present embodiment, it is intended to determine where electric power stored in the storage cell 81 (stored electric power) originates when the storage cell 81 mounted in the electric vehicle 8 is regarded as the decentralized power source, as described above, and to use the storage cell 81 where a proportion of electric power originating from a power source lower in $CO_2$ emission amount (a nuclear power generation source, the solar power-generation system 6, the wind power-generation system 7, and so forth). The power aggregator 4 has such a feature as described. The large-scale power-generation system 5, the solar power-generation system 6, the wind power-generation system 7, and the storage cell 81 are each hereinafter described as the power source where appropriate.

The configuration in Fig. 1 shows one example of the electric power system monitor-control system 1; however, it is to be pointed out that the invention be not limited thereto. Further, with the present embodiment, the storage cell 81 is the one mounted in the electric vehicle 8, however, the storage cell 81 is not limited thereto, and other storage cell 81 may be used as a target.

Furthermore, apparatuses (not shown) consuming electric power from the power source are connected to the electric power system 11.


(Configuration of the power aggregator)

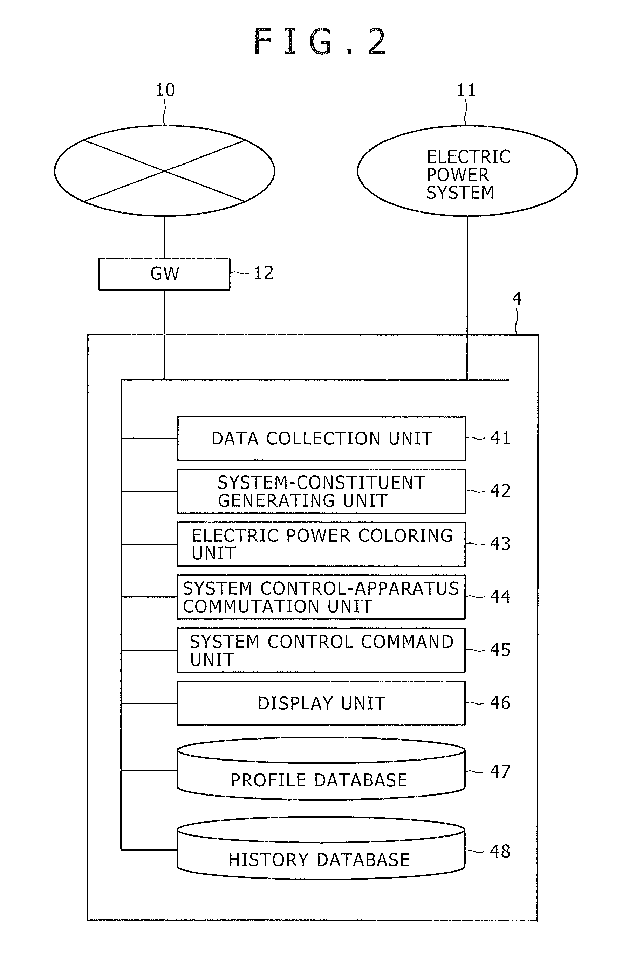

Fig. 2 is a view showing an example of the configuration of the power aggregator according to the first embodiment of the invention.

The power aggregator 4 is connected to the communications network 10 via a gateway (GW) 12, and is connected to the electric power system 11 as well. The power aggregator 4 includes a data collection unit 41, a system-constituent generating unit 42, an electric power coloring (power-source identifying unit) unit 43, a system control apparatus computation (power-source selection) unit 44, a system control command unit 45, a display unit 46, a profile database 47, and a history database 48.

The data collection unit 41 has a function for colleting information in the electric power system 11 with the power aggregator 4 connected thereto, via the communications network 10. The system-constituent generating unit 42 has a function for deciding a monitor-control target on the basis of information from the data collection unit 41.

The electric power coloring unit 43 has a function for executing an electric power coloring processing. Herein, the electric power coloring processing is meant by processing for distinguishing (coloring) from which power generator electric power stored in the storage cell 81 originates. The electric power coloring unit 43 is a constituent characterizing the present embodiment. The system control apparatus computation unit 44 has a function for deciding a control apparatus of the electric power system 11, and the power source to be used on the basis of the result of processing by the electric power coloring unit 43.

The system control command unit 45 has a function for instructing control to the apparatus computed by the system control apparatus computation unit 44.

The display unit 46 is a display apparatus such as a display for showing information, and so forth.

Information for use in a running analysis of the electric vehicle 8, such as the running history of the electric vehicle 8, is stored in the profile database 47.

Information collected via the electric power system 11, the result of processing by the electric power coloring unit 43, and so forth are stored in the history database 48.

The power aggregator 4 is implemented by a PC (Personal Computer), and so forth, and the respective units 41 to 45 are embodied upon programs stored in a ROM (Read Only Memory) (not shown), and a HDD (Hard Disk Memory) (not shown) being expanded in a RAM (Random Access Memory) to be executed by a CPU (Central Processing Unit). Otherwise, the power aggregator 4 may be a blade server, and the respective units 41 to 48 each may be a blade as a constituent of the blade server.

(Processing)

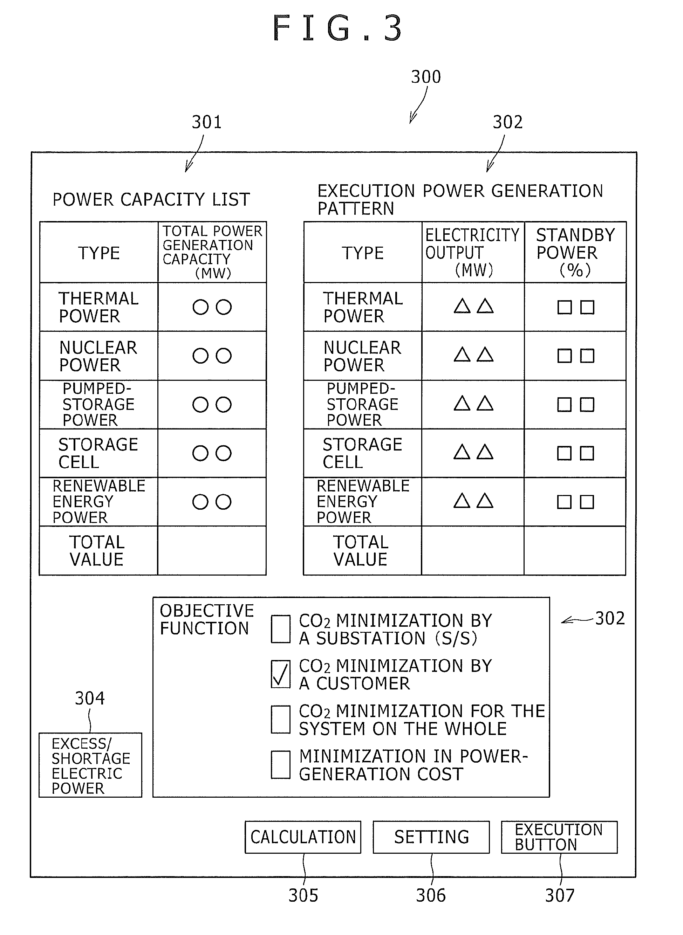

Next, processing according to the present embodiment is described with reference to Figs. 3 to 10 while referring to Figs. 1 and 2.

Fig. 3 is a view showing an example of a parameter-setting screen according to the first embodiment.

The power aggregator 4 shows a parameter setting screen 300 of Fig. 3 on the display unit 46 before starting the processing according to the present embodiment, and a user executes setting of an objective function, and so forth via an input unit (not shown) of the power aggregator 4.

The parameter setting screen 300 includes a power capacity list display-area 301, an execution power generation display-area 302, an objective function setting-area 303, an excess/shortage power input window 304, a calculation button 305, a setting button 306, and an execution button 307.

The power capacity list display-area 301 shows total power generation capacities classified by a power generation type. The total power generation capacity means a capacity of electric power that can be generated at present. The power generation type includes, for example, thermal power generation, nuclear power generation, hydroelectric power generation, pumped-storage power generation, the storage cell 81 of the electric vehicle 8, wind power generation, renewable energy power generation, and so forth. Herein, the renewable energy power generation refers to energy present in nature, repeatedly obtainable, such as the solar power-generation, and so forth. Further, a total value of the total power generation capacities, as well, is displayed on the power capacity list display-area 301.

The present electricity output as well as standby power, classified by the power generation type, as is the case with the power capacity list display-area 301, is shown in the execution power generation display-area 302, and further, a total value of the electricity output, and the standby power is shown therein. The standby power is electric power calculated by a formula; the total power generation capacity - the electricity output.

A plurality of the objective functions are selectable in the objective function setting-area 303. The objective function is a function for deciding an execution power generation pattern, the function being capable of selecting minimization of $CO_2$ by a substation (S/S), minimization of $CO_2$ by a customer (user), minimization of $CO_2$ of the electric power system 11, as a target, on the whole, minimization of a power-generation cost, and so forth.

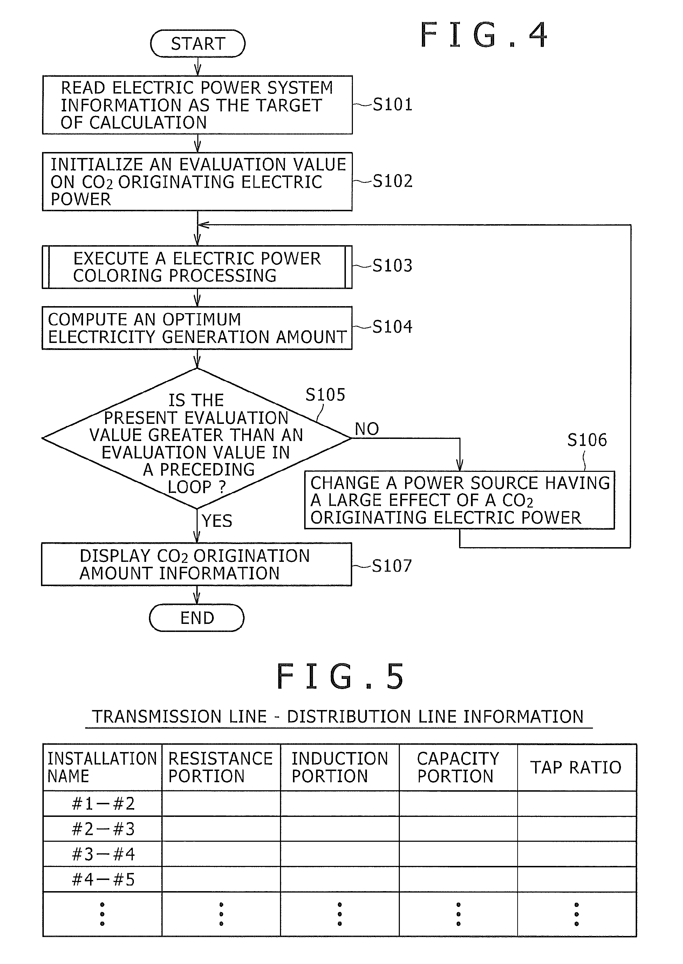

In the case of using the electric power system monitor-control system 1 under on-line control, once an objective function is decided on in the parameter-setting screen 300, the power aggregator 4 detects an excess / a shortage in electric power of the electric power system 11, as the target, thereby deciding the execution power generation pattern on the basis of the excess / the shortage. Further, the power aggregator 4 sends out a command to the system control command unit 45 concurrently with computation of a control calculation result (the result of the power coloring processing), thereby displaying the control calculation result on the display unit 46. At the time of selecting an objective function, a user inputs a selection of the setting button 306 to thereby turn the objective function setting-area 303 into an active state, and subsequently, the user selects a necessary objective function. After the objective function is selected, the user inputs selection of the execution button 307, whereupon the objective function setting-area 303 is turned into a non-active state, and electric power system monitor-control shown in Fig. 4 is executed. The objective function setting-area 303 is not turned into an active state for the duration of the execution of the electric power system monitor-control unless the user inputs the selection of the setting button 306 again.

Meanwhile, when the electric power system monitor-control system 1 is used off line, that is, the electric power system monitor-control system 1 is used for supply and demand planning, the user inputs the selection of the setting button 306 to turn the objective function setting-area 303 into the active state, thereby setting a desired objective function, and subsequently, the user inputs an excess / a shortage in supply and demand balance to the excess/shortage power input window 304 to input the selection of the calculation button 305, whereupon the power aggregator 4 computes the execution power generation pattern at the time of the supply and demand planning. Herein, the excess / the shortage in supply and demand balance is a total value of the standby power, and so forth, representing electric power desired to be supplied from the storage cell 81.

After the setting button 306 is inputted, the objective function setting-area 303 is not turned into the non-active state, and subsequently, the user inputs the excess / the shortage in supply and demand balance to the excess/shortage power input window 304 to thereby input the selection of the calculation button 305, whereupon continuous calculation can be manually executed. In this case, "minimization of $CO_2$ by a substation (S/S)" among the objective functions shown by way of example is an objective function for minimizing electric power where $CO_2$ originates by a substation in the electric power system 11 as the target. Further, "minimization of $CO_2$ by a customer" is an objective function for minimizing $CO_2$ origination electric power flowing from the electric power system 11 as the target. Further, "minimization of $CO_2$ on the whole" is an objective function for optimizing $CO_2$ generating in the electric power system 11 on the whole. Then, "minimization of a power generation cost" is an objective function for optimizing the power generation cost (expenses) of the electric power system 11, as the target, on the whole. In this connection, [by a substation (S/S)], [by a customer], [on the whole], and so forth, among the objective functions, each thereof represent a selection condition. In Fig. 3, if the objective function [minimization of a power-generation cost] is selected, the selection condition will be [the whole].

(Overall processing)

Next, referring to Fig. 2, there is described hereinafter overall processing of an electric power system monitor-control method according to the first embodiment of the invention with reference to Fig. 4.

Fig. 4 is a view showing the overall processing of the electric power system monitor-control method according to the first embodiment.

First, the data collection unit 41 of the power aggregator 4 reads information on respective nodes (electric power system information) including the storage cell 81 from the electric power system 11 regarded as the target of calculation (step S101). The information that is read is information on an apparatus meeting a selection condition among the objective functions that are set by the user, in the objective function setting-area 303 of the parameter setting screen 300 of Fig. 3. More specifically, all information blocks with respect to the apparatuses meeting the selection condition among the objective functions are read out. The information blocks that are read include an information block on a measuring instrument provided at the power source, and respective apparatuses (nodes), an information block on the open/ close state of a switch of a relevant apparatus, and electric power physical quantity. The apparatus meeting the selection condition refers to, for example, all the apparatuses of the electric power system 11 on the whole if the selection condition is [the whole], while referring to a power generator supplying electric power to an electric power company with whom a customer is under a contract if the selection condition is [by a customer]. Further, the apparatus meeting the selection condition refers to an apparatus connected to a substation supplying electric power to the storage cell 81 if the selection condition is [by a substation (S/S)].

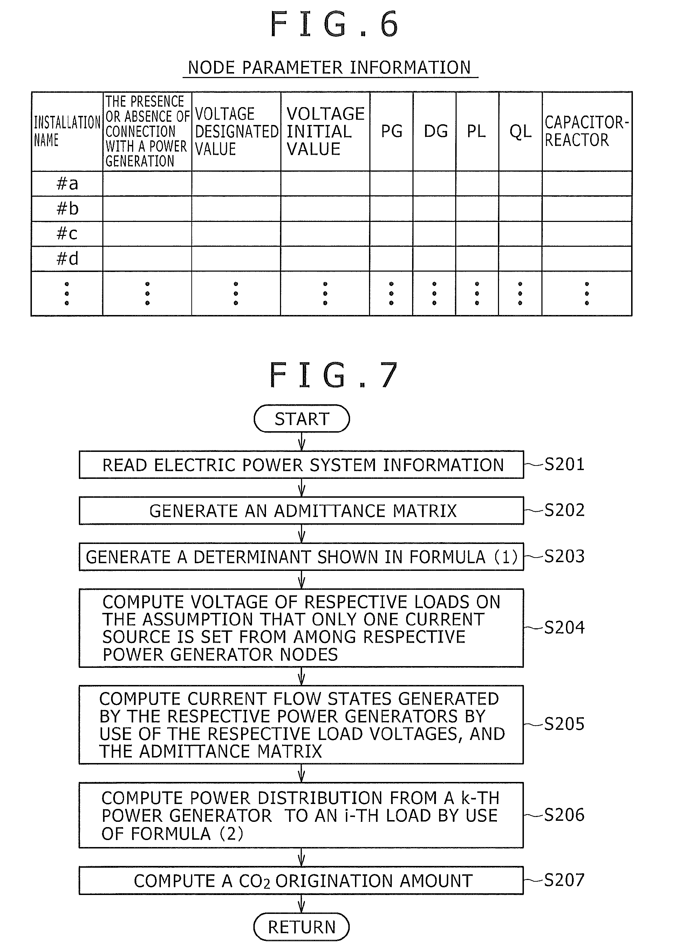

The electric power system information as collected is shown in a format for use in transmission line - distribution line information, shown in Fig. 5, node parameter information, shown in Fig. 6, and so forth to be stored in the history database 48.

Fig. 5 is a view showing an example of the transmission line - distribution line information.

The transmission line - distribution line information includes an installation name, a resistance portion, an induction portion, a capacity portion, and a tap ratio in the case of a transformer, with respect to each transmission line · distribution line. In this connection, the installation name is shown in the format of a start node name to a terminal node name (for example, #1 to #2: #1 is the start node name, and #2 the terminal node name. Further, the node indicates each of the power sources, and each of the apparatuses, respectively, connected to the electric power system 11. Accordingly, the storage cell 81 is one of the nodes.

Fig. 6 is a view showing an example of the node parameter information. The node parameter information includes a node installation name, the presence or absence of connection with a power generator, a voltage designated value, a voltage initial value, effective power (PG) of electricity output, inactive power (QG), node effective power (PL), node inactive power (QL), a capacitor · reactor connected to a node, and so forth. The voltage designated value is a voltage value (an electromotive force) at each of the power generators 5 to 7, and the voltage initial value is a parameter for causing convergence of calculation in the case where the electric power system 11 is of large-scale.

The electric power coloring unit 43 initializes an evaluation value on $CO_2$ originating electric power after the step S101 of Fig. 4 (step S102).

Then, the electric power coloring unit 43 differentiates stored power of a storage cell 81 by a $CO_2$ originating power generation source, thereby executing a electric power coloring processing for virtually effecting color identification (coloring) (step S103). The power-coloring processing is described later on with reference to Figs. 7 to 9.

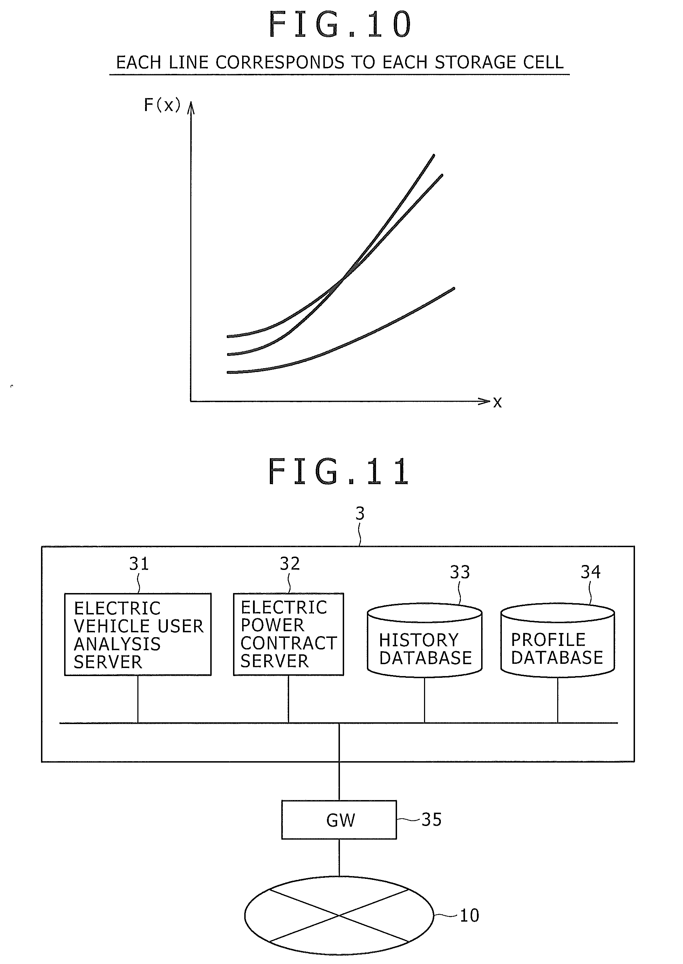

Subsequently, the system control apparatus computation unit 44 computes an optimum electricity output of a power generator as well as a storage cell 81, for minimizing $CO_2$ emission, connected to a system that is the target of calculation (step S104). The optimum electricity output is meant by such an output (for example, a voltage value) from each of the storage cells 81 as to enable $CO_2$ emission in each of the storage cells 81 to be minimized. The optimum electricity output is described with reference to Fig. 10 later on; however, a function between the $CO_2$ emission and the output is computed on the basis of a $CO_2$ origination amount computed in the step S104.

Then, the system control apparatus computation unit 44 regards the optimum electricity output at present as the evaluation value on the $CO_2$ origination amount.

Subsequently, the system control apparatus computation unit 44 determines whether or not the present evaluation value on the $CO_2$ origination amount is greater than an evaluation value on the $CO_2$ origination amount in a preceding loop (step S105). If the result of the step S105 shows that the present evaluation value on the $CO_2$ origination amount is not greater than the evaluation value on the $CO_2$ origination amount in the preceding loop (S105 → No), the system control apparatus computation unit 44 stores the present evaluation value on the $CO_2$ origination amount, and changes a power source (a storage cell 81) having a large effect of a $CO_2$ originating electric power (step S106), thereby causing the processing to revert to the step S103. In the case of making a change, use is made of, for example, a method whereby a power source greater in the optimum electricity output is substituted for a power source smaller in the optimum electricity output.

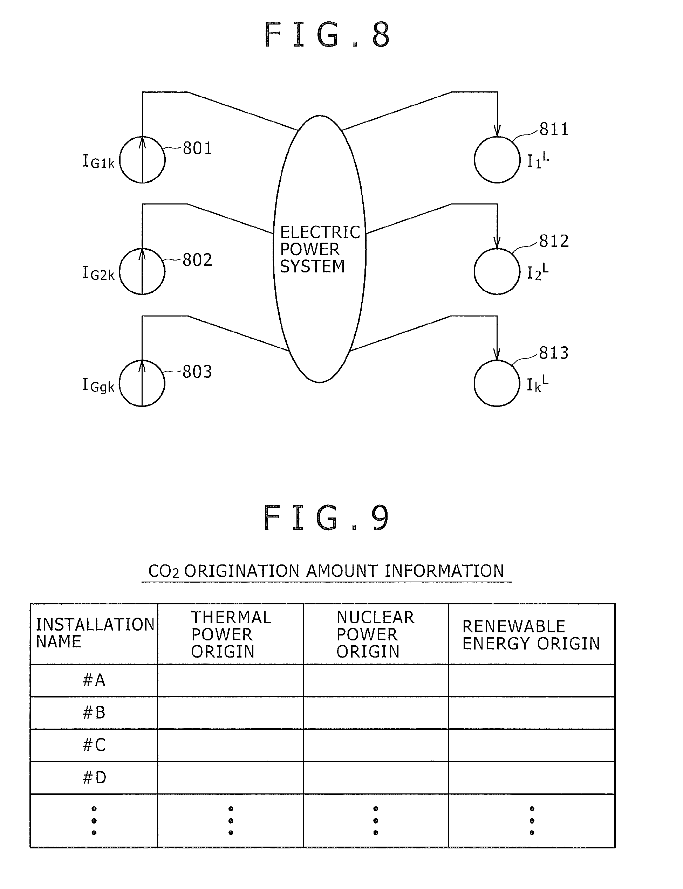

If the result of the step S105 shows that the present evaluation value on the $CO_2$ origination amount is greater than the evaluation value on the $CO_2$ origination amount in the preceding loop (S105 --> Yes), the present evaluation value on the $CO_2$ origination amount can be estimated at the minimum value, so that the system control apparatus computation unit 44 displays information on the $CO_2$ origination amount (Fig. 9) as the result of the power coloring (step S107), thereby completing the processing. At this point in time, a value corresponding to the storage cell 81 in the power capacity list display-area 301, shown in Fig. 3, and a value corresponding to the storage cell 81 in the execution power generation display-area 302, shown in Fig. 3, may be updated to the optimum electricity output computed in the step S104. Further, after [Yes] is selected in the step S105, the system control apparatus computation unit 44 may compute output electric power from each of the storage cells 81 on the basis of the sum total of the optimum electricity output values computed in the step S104, at the respective storage cells 81, thereby determining whether or not the output electric power is a value not less than a value inputted to the excess/shortage power input window 304. More specifically, the system control apparatus computation unit 44 may determine whether or not the output electric power from the storage cell 81 covers the shortage in electric power. If the output electric power is a value less than the value inputted to the excess/shortage power input window 304, a warning screen is displayed, whereupon the power aggregator 4 reverts to the processing in the step S103, while if the output electric power is a value within the value inputted to the excess/shortage power input window 304, the power aggregator 4 may for example, complete, the processing.

(Electric power coloring processing)

Next, referring to Fig. 2, there is described hereinafter the electric power coloring processing in the step S103 of Fig. 4, with reference to Figs. 7, and 8.

Fig. 7 is a flow chart showing a procedure for the electric power coloring processing according to the first embodiment, and Fig. 8 is a schematic diagram of an electric power system.

The electric power coloring is meant by virtually effecting color identification of the stored electric power of the storage cell 81 by a power generator type, as previously described. The power generator type means, for example, thermal power, nuclear power, hydroelectric power, and renewable energy.

First, the electric power coloring unit 43 reads information (electric power system information) on the electric power system 11 as the target of processing (step S201). Processing in the step S201 is identical to that in the step 101, omitting therefore description thereof.

Next, an admittance matrix is generated on the basis of the electric power system information read by the electric power coloring unit 43 (step S202). The admittance matrix is expressed by $Y_{GG}$, $Y_{GL}$, $Y_{LG}$, $Y_{LL}$ in formula (1). Herein, a subscript [G] indicates a power generator (power generators installed at a thermal power station, and a nuclear power station, respectively), and a subscript [L] indicates a load. The load indicates an apparatus receiving power supply from each of the power generators 5 to 7, and the storage cell 81 in as-charged state is included in the load (the storage cell 81 being charged is regarded as a load while the storage cell 81 being discharged is regarded as a power generator). More specifically, $Y_{GG}$ is admittance of a power generator itself or other power generators as seen from the power generator, $Y_{GL}$ admittance of a load as seen from a power generator, $Y_{LG}$ admittance of a power generator as seen from a load, an $Y_{LL}$ admittance of a load itself or other loads as seen from the load.

Then, the electric power coloring unit 43 generates a determinant shown in formula (1) from the admittance matrix generated in the step S202 (step S203).

[Formula 1]

$$\begin{bmatrix} I_G \\ O \end{bmatrix} = \begin{bmatrix} Y_{GG} & Y_{GL} \\ Y_{LG} & Y_{LL} \end{bmatrix} \begin{bmatrix} V_G \\ V_L \end{bmatrix} \quad \dots \quad (1)$$

Herein, in formula (1), $I_G$ indicates matrix of current values from respective power generators (column vector), and $V_G$ indicates matrix (column vector) of voltage values generated by the respective power generators. $V_L$ indicates matrix (column vector) of voltage values at respective loads. In this connection, since $I_G$, and $V_G$ (voltage designated value in Fig. 6) are each a known value in formula (1), $V_L$ becomes a variable.

Subsequently, the electric power coloring unit 43 computes voltages ($V_L$) of respective loads when only one current source (the respective power generators 5 to 7) is set from among the respective power generators 5 to 7. More specifically, the electric power coloring unit 43 computes the voltages of the respective loads on the assumption that only one current source is set from among the respective power generator nodes (step S204).

Processing in the step S204 is described hereinafter with reference to Fig. 8. To describe the principle underlying the processing in the step S204, in the case where a power generator as well as a load of the electric power system 11 as a target is expressed in terms of current, an optional one of power generators expressed as current sources is selected by use of an electric power equation shown in formula (1), and if respective current values of power generators other than the selected power generator are 0, the electric power coloring unit 43 finds what value the voltage of a load will be. In Fig. 8, reference signs 801 to 803 each indicates a power generator installed at a power station, and reference signs 811 to 813 each indicates a load. In this case, $I_{G1K}$, $I_{G2K}$, ... $I_{GgK}$ are current impact amounts on a k-th load, exerted by power generators G1, G2, ..., Gg, respectively, representing elements composing $I_G$ of formula (1). Further, $I_{1L}$, $I_{2L}$, ..., $I_{KL}$ each are a current flowing to first load, second load,..., k-th load, respectively.

In this case, if, for example, only $I_{G1K}$ is at a predetermined value, and $I_{G2K}$, ... $I_{GgK}$ each are at [0], it is possible to compute an impact amount on each of the loads, exerted by the first power generator.

More specifically, if the values of the respective elements of $V_L$ are solved by simultaneous equations on the assumption that only $I_{G1K}$ among the elements of the column vector $I_G$ on the left side of formula (1) is at a predetermined value, and $I_{G2K}$, ... $I_{GgK}$ each are at [0], it is possible to compute an impact amount on a voltage $V_L$ (column vector $V_{L1}$) at each of loads, exerted by the first power generator.

Similarly, if the values of the respective elements of $V_L$ are solved by simultaneous equations on the assumption that only $I_{G2K}$ is at a predetermined value, and $I_{G1K}$, $I_{G3K}$, ... $I_{GgK}$ each are at [0], it is possible to compute an impact amount on a voltage $V_L$ (column vector $V_{L2}$) at each of loads, exerted by the second power generator.

Thereafter, the same processing is executed up to $I_{GgK}$, thereby computing column vectors $V_{L3}$, ..., $V_{Lg}$.

Herein, when the optional one of the power generators expressed as the current sources is selected, and the respective current values of the power generators other than the selected power generator are 0, the electric power coloring unit 43 finds what value the voltage of the load will be at. However, an impact on a load, exerted by a power generator, may be examined by causing a current value of one selected power generator to undergo a micro-change to thereby find an extent to which the voltage of a load will vary.

Then, the electric power coloring unit 43 computes respective states of current flows generated by the respective power generators by use of the voltages at the respective loads, computed in the step S204, and the admittance matrix (step S205).

To more specifically describe the processing in the step S205, the electric power coloring unit 43 add up every elements of the column vectors $V_{L1}$, $V_{L2}$, ..., $V_{Lg}$, respectively, found when the voltages at the respective loads are computed in the step S204, thereby computing a column vector $V_L$ ($V_L = V_{L1} + V_{L2} + ..., V_{Lg}$).

Then, the electric power coloring unit 43 substitutes the column vector $V_L$ as computed for $V_L$ on the right side of formula (1), while substituting respective elements of a load $I_L$, as variables, for a 0 column lower part on the left side, whereupon $I_L$ is solved, thereby computing the respective elements (current values at the load) of $I_L$. By so doing, the respective states of the current flows generated by the respective power generators can be computed.

Subsequently, the electric power coloring unit 43 computes power distribution from a k-th power generator to an i-th load by use of formula (2) (step S206).

[Formula 2]

$$W_i{}^k = V_i \times I_i{}^{k*} \quad ... \quad (2)$$

In formula (2), $V_i$ is an element of a column vector $V_L$, and $I_i{}^{k*}$ is a conjugate complex number of an element $I_i{}^k$ of a column vector $I_L$. Herein, column vector $V_L$ is a value of a current flowing from the k-th power generator to the i-th load.

The electric power coloring unit 43 multiplies the power distribution {$W_1{}^K$ of formula (2)} from the k-th power generator to the i-th load, as computed, by a $CO_2$ emission coefficient preset for every power generation types, thereby computing a $CO_2$ origination amount at the respective loads (increase/decrease in supplied power by a $CO_2$ originating source) (step S207). The electric power coloring unit 43 sequentially records the $CO_2$ origination amounts at the respective loads, as computed, in the history database 48, using the format of $CO_2$ origination amount information shown in Fig. 9. Further, the electric power coloring unit 43 may extract a load corresponding to the storage cell 81 among the loads, and analyze in what tendency the $CO_2$ origination amounts of the respective storage cells 81 mounted in a plurality of the electric vehicles 8 will be, thereby accumulating the results of an analysis in the profile database 47.

Fig. 9 is a view showing an example of the $CO_2$ origination amount information according to the first embodiment. As shown in Fig. 9, respective $CO_2$ origination amounts of thermal power origin, nuclear power origin, and renewable energy origin, such as wind power generation, and so forth, are stored on respective loads (installation names).

(Step 104 in detail)

Next, there is described hereinafter the step 104 previously described (computation of the optimum electricity output) with reference to Fig. 10. The electric power coloring unit 43 computes actual distribution of a charge/discharge amount (electric power) from the power source, such as the respective power generators when the storage cell 81 is regarded as a power generator, the respective storage cells 81, the renewable energy power generator, and so forth, to the respective loads in the electric power system 11, on the basis of a concept of economical load distribution of a power generator. Under this concept, an output of a power source is quadratically approximated to a $CO_2$ emission amount, thereby finding outputs of the respective power generators such that the sum total of the respective $CO_2$ emission amounts of the power generators as a whole will be at an optimum value. Herein, the $CO_2$ emission amount is an amount of $CO_2$ actually emitted by each of the power generators, and the $CO_2$ origination amount indicates electric power of thermal power origin, electric power of nuclear power origin, and so forth, included in electric power stored in each of the storage cells 81.

In contrast to the case of the power generator in thermal power generation, a function between an output x, and $CO_2$ emission does not exist in the case of each of the storage cells 81, and therefore, a pseudo function {formula (3)} corresponding thereto need be prepared. In this case, $F_1(x)$ in formula (3) is a $CO_2$ emission amount. In the case of the renewable energy, the $CO_2$ emission amount can be regarded as [0].

$$F_i(x) = a_i x^2 + b_i x + c_{i-} \quad \dots \quad (3)$$

In formula (3), "i" is a number assigned to the storage cell 81. Fig. 10 shows the concept of formula (3). In Fig. 10, the vertical axis indicates the $CO_2$ emission amount $F_1(x)$, and the horizontal axis indicates the output (an output value when the storage cell 81 is used as a power generator).

Further, in Fig. 10, lines each correspond to each of the storage cells 81.

When significance of respective coefficients in formula (3), when the economical load distribution of a power generator is considered, $a_i$ corresponds to a slope of a quadratic curve (degree of efficiency), $b_i$ an amount of movement in an x-axis direction (the upper / lower limit of an output), and $c_i$ a y-intercept (the lowest value of the optimum electricity output)

Then, x for minimizing the sum total {formula (4)} of the $CO_2$ emission amounts $F_1(x)$, by the storage cell 81, represents the optimum electricity output.

[Formula 3]

$$\sum_i F_i(x) \quad \dots \quad (4)$$

The storage cell 81 is charged with electric power originating from, for example, nuclear power, thermal power, and renewable energy power, at an optional proportion, respectively. Therefore, if the proportion of the electric power originating from nuclear power, included in the storage cell 81, is $P_N$, the proportion of the electric power originating from thermal power, included in the storage cell 81, is $P_F$, and the proportion of the electric power originating from renewable energy power, included in the storage cell 81, is $P_R$, while presetting such that the $CO_2$ emission coefficient of the nuclear power generation is $\alpha$, the $CO_2$ emission coefficient of the thermal power generation is $\beta$, the $CO_2$ emission coefficient of the renewable energy power is $\gamma$, and so forth, a $CO_2$ emission coefficient $a_i$ can be computed from formula (5) as follows. Further, the proportion $P_N$ of the electric power originating from the nuclear power, included in the storage cell 81, is obtained by dividing the $CO_2$ origination amount originating from the nuclear power of the $CO_2$ origination amount computed in the step S207 by a total amount of electric power stored in a relevant storage cell 81. Similarly, the proportion $P_F$ of the electric power originating from the thermal power, is obtained by dividing the $CO_2$ origination amount originating from the thermal power of the $CO_2$ origination amount computed in the step S207 by a total amount of the electric power stored in the relevant storage cell 81, and the proportion $P_R$ of the electric power originating from the renewable energy power, is obtained by dividing the $CO_2$ origination amount originating from the renewable energy power of the $CO_2$ origination amount computed in the step S207 by a total amount of the electric power stored in the relevant storage cell 81.

$$a_i = \alpha P_N + \beta P_F + \gamma P_R \quad \dots \quad (5)$$

Meanwhile, since $b_i$ means the upper / lower limit of the output, the reciprocal of SOC (State Of Charge) of the storage cell 81 is set as $b_i$, and 0 is set as $c_i$ with respect to the storage cell 81. Further, values obtained by dividing a prescribed minimum electric power necessary for driving a storage cell into three equal parts are defined $P_N$, $P_F$, $P_R$,

whereupon $a_i$ may be found by substituting these values for $P_N$, $P_F$, $P_R$ for formula (5).

(Data center)

Fig. 11 is view showing an example of the configuration of a data center. The data center 3 includes an electric vehicle user analysis server 31, an electric power contract server 32, a history database 33 for collection via the communications network 10, and a profile database 34 prepared from the history database 33 by use of the electric vehicle user analysis server 31. Further, respective apparatuses 31 to 34 are connected to the communications network 10 via a gateway (GW) 35. The gateway 35 has an authentication function necessary upon transmission and reception of data. The respective units 31 to 34 are further described later on.

Further, Fig. 11 shows that the electric vehicle user analysis server 31, the electric power contract server 32, the history database 33, and the profile database 34 are each an independent apparatus, however, these apparatuses may be implemented by use of one PC (Personal Computer).

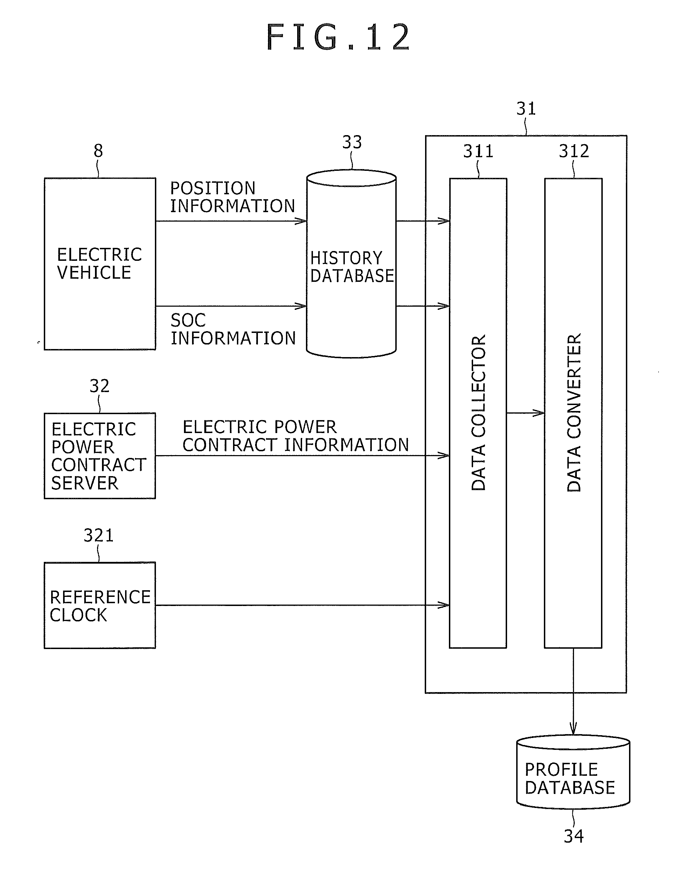

Fig. 12 is a view showing the configuration of the electric vehicle user analysis server.
The electric vehicle user analysis server 31 includes a data collector 311, and a data converter 312.
The respective functions of the data collector 311, and the data converter 312 are described are hereinafter.
Information such as information blocks on the respective position of the electric vehicles 8, information blocks on the respective SOCs (State Of Charge) of the storage cells 81 (Fig. 1) mounted in the electric vehicles 8, respectively, and so forth, is stored in the history database 33.

The data collector 311 collects electric vehicle information including the information blocks on the respective positions of the electric vehicles 8, and the information blocks on the respective SOCs (State Of Charge) of the storage cells 81 mounted in the electric vehicles 8, respectively, from the history database 33 via the communications network 10.
Further, because information blocks on power contract prices desired by respective users of the electric vehicles 8 (power contract price information blocks) are pre-stored in the electric power contract server 32, the data collector 311 collects these information blocks as well from the electric power contract server 32 via the communications network 10.
Meanwhile, the data collector 311 refers to a standard clock 321, thereby acquiring a time when the information block on each of the electric vehicles 8 is collected, and a time when the power contract price information block is collected.
The data converter 312 executes processing of the information blocks collected by the data collector 311 into desired forms, respectively, to be stored in the profile database 34.
Further, the electric vehicle user analysis server 31 of Fig. 12 is implemented by the PC, and so forth, and the respective units 311, 312 are embodied upon the programs stored in the ROM, and the HDD being expanded in the RAM to be executed by the CPU.

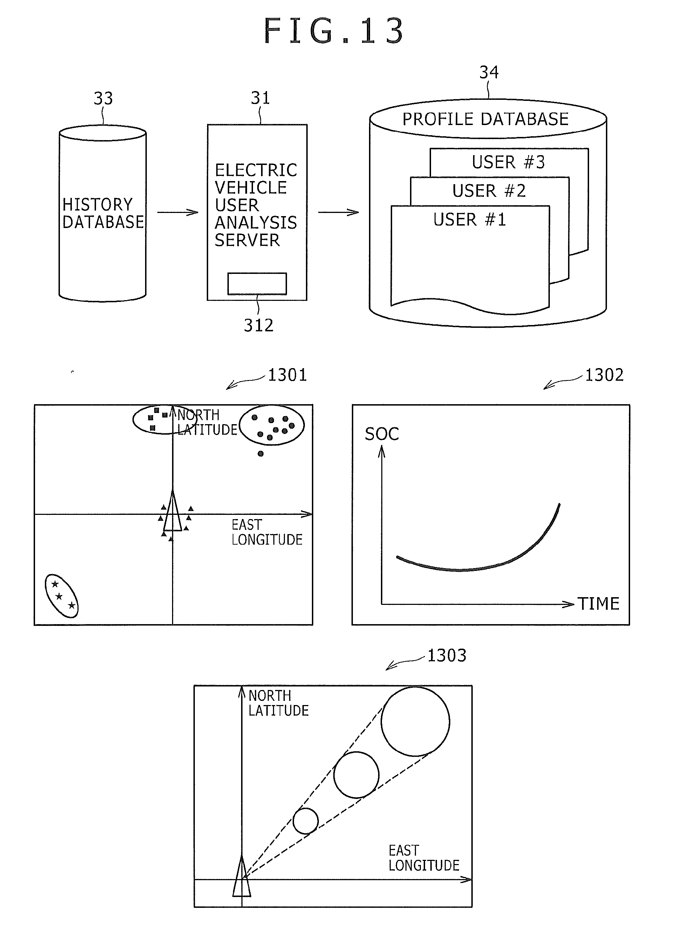

Fig. 13 is a view for describing the function of the data converter. The data converter 312 of the electric vehicle user analysis server 31 prepares profile data blocks by the user of each of the electric vehicles 8 on the basis of the information blocks acquired from the history database 33 to be stored in the profile database 34.

The profile data blocks are shown in a lower stage of Fig. 13 by way of example.
A profile data block 1301 is a profile data block in which a position centering around a user's home is plotted in, for example, a coordinate system where the horizontal axis indicates west longitude - east longitude, and the vertical axis indicates south latitude - north latitude, so as to enable where, and at what point in time during the day a user parks a vehicle, or in what neighborhood the user tends to drive the vehicle to be recognized on the basis of collected information blocks on the respective position of the electric vehicles 8, and a time. Furthermore, the data converter 312 of the electric vehicle user analysis server 31 executes clustering on the basis of a position only for every regional categories high in the probability of presence to subsequently execute clustering by taking a time into consideration on the basis of history data subjected to the preceding clustering. For example, a quantification analysis method, and so forth are used for the clustering.
Daily behaviors of the respective users of the electric vehicles 8 become predictable on the basis of the profile data block 1301 described as above, so that it is possible to clarify whether or not the storage cell 81 of the electric vehicle 8 can be a target of control when the same is regarded as the decentralized power source,

A profile data block 1302 is an example of a profile data block showing daily variation in the SOC in each of the electric vehicles 8, as extracted from the history data. If it is possible to keep track of the daily variation in the SOC during a cycle of charging, running, and discharging, this will render it easier to issue a control signal for utilization of the respective storage cells 81 of the electric vehicles 8, as the decentralized power source. Further, it will become possible to predict running from an optional location to another optional location.

A profile data block 1303 is an example of a profile data block showing at which location the electric vehicle will be with the elapse of once every 10 minutes, 20 minutes, and 30 minutes, respectively, from an optional location with a high probability in an image like a typhoon forecast given by Meteorological Agency. Use of information like this will render it to possible to make a rough estimate on a time when the electric vehicle 8 can plug in a recharger when applying a control to the storage cell 81 of the electric vehicle 8, serving as the decentralized power source.

(Summary of the first embodiment)

With the first embodiment, there is provided a screen where an objective function necessary for $CO_2$ reduction is selected from the objective function selection screen 300 including at least any of reduction in $CO_2$ emission originating electric power, on a substation-by-substation basis, in the electric power system, reduction in $CO_2$ emission originating electric power, on a user-by-user basis, and $CO_2$ minimization of the system on the whole, and the electric-power coloring processing as an index for the $CO_2$ reduction is executed to make a calculation on a $CO_2$ electricity generation origination amount, thereby automatically displaying a computation result on the basis of the calculation, so that it becomes possible to operate the electric power system capable of reducing $CO_2$ along the intent of a system operator.

(Second Embodiment)

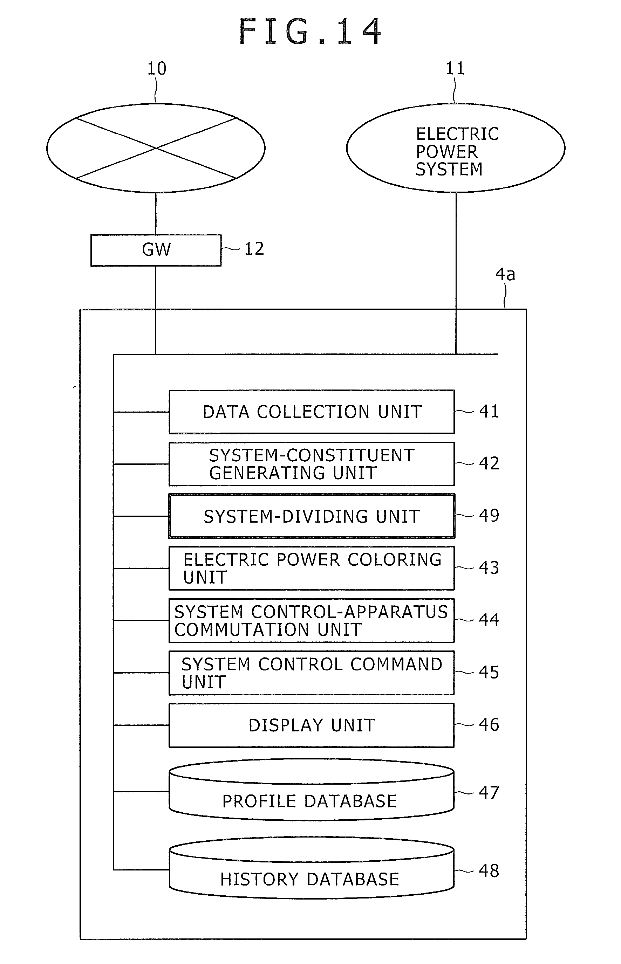

Next, a second embodiment of the invention is described with reference to Figs. 14 to 18.
The second embodiment is intended to divide the electric power system 11 into groups to execute an electric power coloring processing by the group, thereby alleviating the burden of the electric power coloring processing.

(Configuration of a power aggregator)

Fig. 14 is a view showing an example of the configuration of a power aggregator 4a according to the second embodiment.
The power aggregator 4a of Fig. 14 differs from the power aggregator 4 of Fig. 2 only in that a system-dividing unit (an electric power system grouping unit) 49 is provided. Since the power aggregator 4a of Fig. 14 is identical in other respects to the power aggregator 4 of Fig. 2, like reference signs are used, thereby omitting description.
To describe the role of the system-dividing unit 49, the structure of an electric power system 11 as the target is complicated in the case where the electric power system 11 is not divided into groups as is the case with the first embodiment, and there is a possibility that an error in the result of the electric power coloring will increase in the case where a load exists at a distance away from a power generator. More specifically, there is the risk of deterioration in accuracy of the electric power coloring processing. Further, if the structure of the electric power system 11 is complicated, or the electric power system 11 is large in scale, there is a possibility that the burden of the processing will increase when the electric power coloring processing is carried out. In this respect, these demerits can be lessened by virtue of grouping of the electric power system 11 by the system-dividing unit 49.
There is available a method for dividing a system as a target by an algorithm as a method for grouping the electric power system 11 (refer to, for example, Literature "Contributions of Individual Generators to Loads and Flows", by Daniel Kirschen, Ron Allen, Goran Strbac, IEEE Transactions on Power Systems, Vol. 12, No. 1, 1997, pp. 52 - 60), however, this method has a problem in that the result of grouping becomes complicated. For this reason, this method has a problem in that a user finds it perceptually difficult to recognize validity of the result of the electric power coloring processing. With the present embodiment, there is proposed grouping of the electric power system 11, without relying on the method disclosed in Literature described as above.
Further, the power aggregator 4s of Fig. 14 is implemented by the PC, and so forth, and the respective units 41 t0 49 are embodied upon the programs stored in the ROM (not shown), and the HDD (not shown) being expanded in the RAM to be executed by the C PU. Otherwise, the power aggregator 4a may be a blade server, and the respective units 41 to 49 each may be a blade as a constituent of the blade server.

(Grouping example)

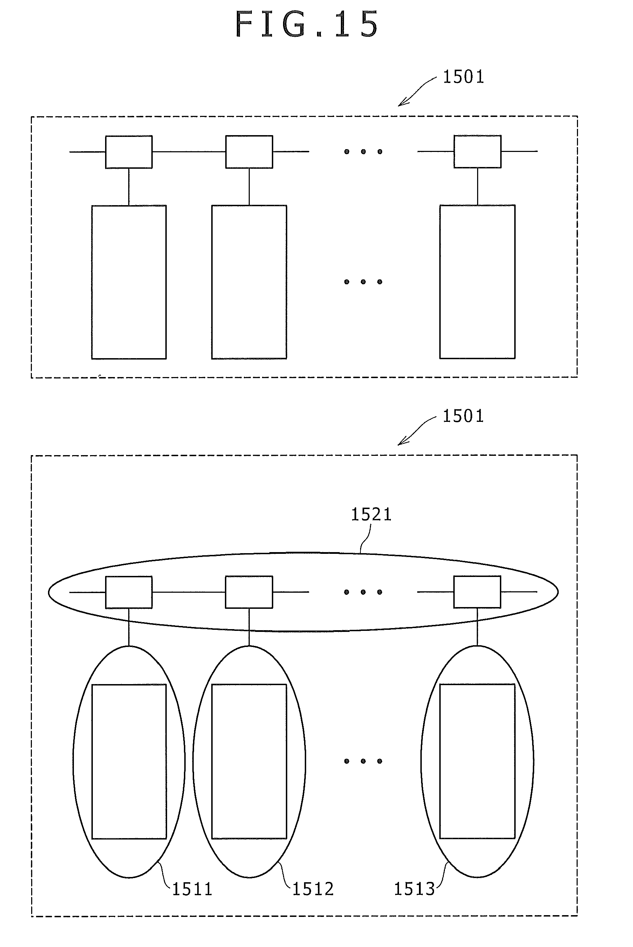

Fig. 15 is a view showing an example of an electric power system grouping according to the second embodiment.
An electric power system 1501 shown in an upper stage of Fig. 15 is the electric power system 11 serving as the target of the electric power coloring.
This electric power system 1501 is divided into a high-voltage group 1521, and low-voltage groups 1511, 1512, and 1513, hanging from the high-voltage group 1521, as shown in a lower stage.
Further, the high-voltage group is hereinafter referred to as a high-voltage system, and the low-voltage group a low-voltage system as appropriate.

(Power system grouping processing)

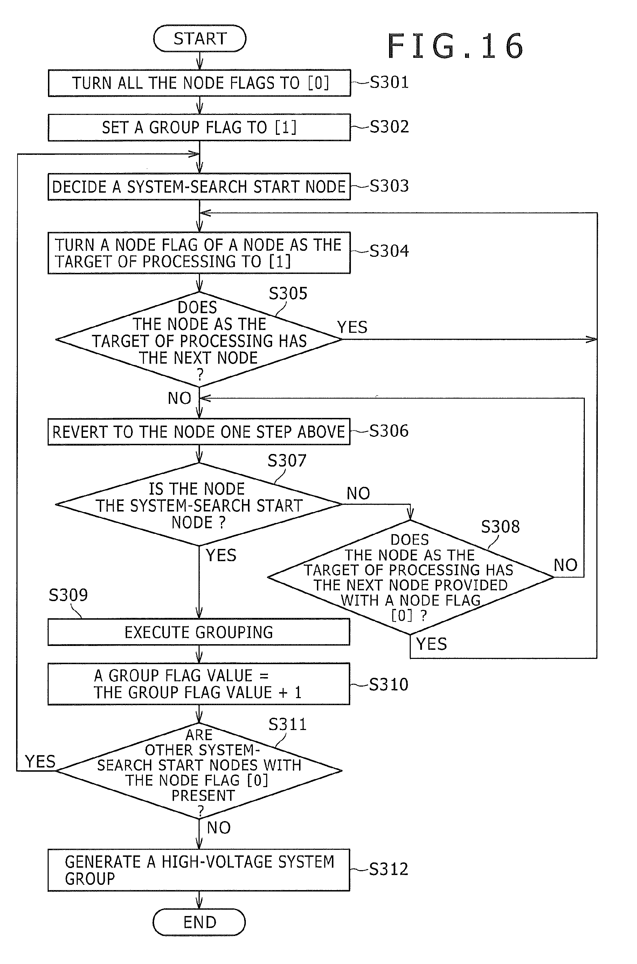

Next, referring to Fig. 14, a power system grouping processing is described with reference to Fig. 16.
Fig. 16 is a flow chart showing a procedure for the power system grouping processing according to the second embodiment of the invention. This processing is a processing executed between the processing in the step S101 and the processing in the step S102, in Fig. 4.

First, the system-dividing unit 49 turns all node flags provided at the nodes of the electric power system 11, respectively, into [0] (step S301). Herein, the node is a load as seen from a power generator, and the storage cell 81 is one of the nodes. Next, the system-dividing unit 49 sets a group flag to [1] (step S302).

Then, the system-dividing unit 49 decides a system-search start node among nodes of a low order system (step S303). Any of the nodes of the electric power system 11 may be selected as the system-search start node; however, the highest order node is preferably selected. Further, processing in the step S303 is described later on.

Subsequently, the system-dividing unit 49 makes search for a node belonging to the low order of the system-search start node, thereby turning a node flag of the node as the target of processing to [1] (step S304).

Then, the system-dividing unit 49 determines whether or not the next node is present (step S305).

If the next node is present according to the result of processing in the step S305 (S305 --> Yes), the system-dividing unit 49 causes the processing to revert to the step S304, thereby turning the node flag of the next node to [1].

If the next node is not present according to the result of processing in the step S305 (S305 →No), the system-dividing unit 49 reverts to a node one step above (step S306), thereby determining determines whether or not the node is the system-search start node (step S307).

If the next node is the system-search start node according to the result of processing in the step S307 (S307 --> Yes), the system-dividing unit 49 causes the processing to proceed to step S309, and executes grouping whereby a node group is made up of the nodes provided with node flags turned [1], respectively, (the step S309), whereupon a group flag value as a group number is given to the node group.

If the next node is not the system-search start node according to the result of processing in the step S307 (S307 →No), the system-dividing unit 49 determines whether or not the node as the target of processing has the next node provided with a node flag [0] (step S308).

If the next node provided with the node flag [0] is not present according to the result of processing in the step S308 (S308 →No), the system-dividing unit 49 causes the processing to revert to the step S306, thereby executing the same processing with respect to the node one step above.

If the next node provided with the node flag [0] is present according to the result of processing in the step S308 (S308 --> Yes), the system-dividing unit 49 causes the processing to revert to the step S304, thereby turning the node flag of the node into [1]

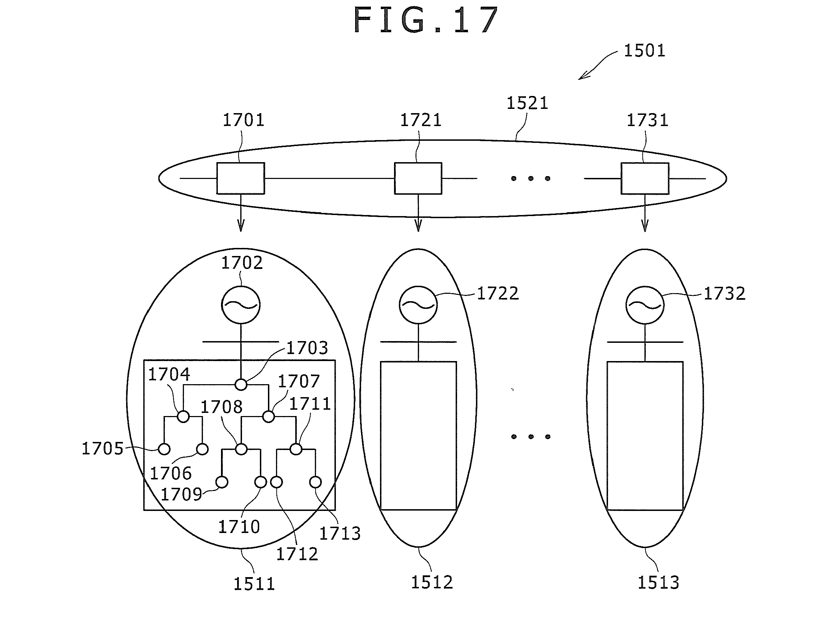

Now, a specific example of the processing in the steps S303 to S308 is described with reference to Fig. 17. Constituent elements in Fig. 17, identical to those in Fig. 15, are denoted by like reference signs, thereby omitting description.

In an electric power system 1501 of Fig. 17, a low order system of, for example, a node 1701 is contracted as a load. Then, a system corresponding to this contracted system is simulated as a partial system 1511 including a simulated power generator node 1702, and so forth. That is, a node 1703, and so forth are regarded as one node as seen from the node 1701. Then, the node 1703, and so forth are regarded as one partial system with the node 1702 regarded as a power generator (as a simulated power generator). Herein, the node 1701 is essentially identical to the node 1702. More specifically, it is the node1701 that originally supplies electric power to the partial system 1511, however, in order to separate the node 1703, and so forth as the partial system 1511, the node 1702 is set as the simulated power generator for the sake of convenience, so that this means that the node 1701, and the node 1702 actually refer to the same node.

The partial system 1511 is hereinafter referred to as a low order system as appropriate. Nodes are connected underneath nodes 1721, 1731, respectively, in s similar state; however, the nodes other than nodes 1722, 1732 are not shown in Fig.17. The nodes 1702, 1722, 1732 are each a simulated power generator.

Further, information blocks pre-divided by the partial system as information on the electric power system 11 are inputted to the power aggregator 4a as shown in Fig. 17.

Further, the storage cell 81 is any of the terminal nodes of respective connections.

The system-dividing unit 49 first selects the node 1702 from the low order system 1511 in the step S303, and the system-dividing unit 49 turns the node flag of the node to [1] in the step S304. Then, the system-dividing unit 49 determines whether or not the next node is present in the step S305. In this case, the node 1703 as the next node is present, and the system-dividing unit 49 therefore determines [Yes], causing the processing to revert to the step S304, thereby turning the node flag of the node 1703 to [1].

Similarly, the system-dividing unit 49 sequentially turns the respective flags of the node 1702 --> the node 1703 --> a node 1704 --> a node 10705 to [1] in this order.

Because the next node is not present at the node 10705, the system-dividing unit 49 determines [No] in the step S305, reverting to the node 1704 one step above in the step S306

Because the node 1704 is not the system-search start node, the system-dividing unit 49 determines [No] in the step S307). Then, the node 1704 includes a node 1706 with a node flag [0], the system-dividing unit 49 therefore determines [Yes] in the step S308 to cause the processing to revert to the step S304, thereby turning the node flag of the node 1706 to [1].

Because the next node is not present at the node 1706, the system-dividing unit 49 determines [No] in the step S305. Then, the system-dividing unit 49 causes the processing to revert to the node 1704 one step above, however, the node 1704 is neither the system-search start node, nor the next node with the node flag [0], so that the system-search start node determines [No] in the step 307, and [No] in the step 308, thereby causing the processing to revert to the node 1703 one more step above.

Because the node 1703 is not the system-search start node, the system-dividing unit 49 determines [No] in the step S307. A node 1707 with a node flag [0] is connected to the node 1703, the system-dividing unit 49 therefore determines [Yes] in the step S308, turning the node flag of the node 1707 [1] in the S304.

Similarly, the system-dividing unit 49 sequentially turns respective node flags of nodes 1708 to 1713 to [1] thereafter. Upon the respective node flags of the nodes up to the node 1713 being turned to [1], a node with a node flag [0] does not exist among the nodes 1702, and thereafter, so that the processing in the steps S305 to S308, respectively, is repeated before reverting to the node 1702. Since the node 1702 is the system-search start node, the system-dividing unit 49 determines [Yes] in the step 307, thereby regarding the nodes 1702 to 1713 as a group (reference sign 1511). In this case, the group that is integrated by the processing in the steps 303 to 308 is referred to as the low-voltage group.

Now, description is reverted to the processing of Fig. 16.

After the respective nodes provided with the node flag [1] (the node traced in the respective steps from S303 to S308) are grouped together in the step S309, the system-dividing unit 49 adds "1" to a group flag, thereby determining whether or not other system-search start nodes with an node flag [0] (the nodes 1721, 1731, and so forth, in the example shown in Fig. 17) are present (the step S311).

If the system-search start node with the node flag [0] is present according to the result of processing in the step S311 (S311 → Yes), the system-dividing unit 49 causes the processing to revert to the step S303, thereby executing the grouping processing by use of the node as the system-search start node. As a result, the groups 1512, 1513, shown in Fig. 17, are generated.

If the system-search start node with the node flag [0] is not present according to the result of processing in the step S311 (S311 →No), the system-dividing unit 49 executes generation of the high-voltage system group (the group 1521 in Fig. 17) (the step S312), whereupon a value with "1" added to the present node flag is regarded as a group number. A high-voltage node may be preset, or the set of the system-search start nodes may be treated as the high-voltage node.

(Electric-power coloring processing)

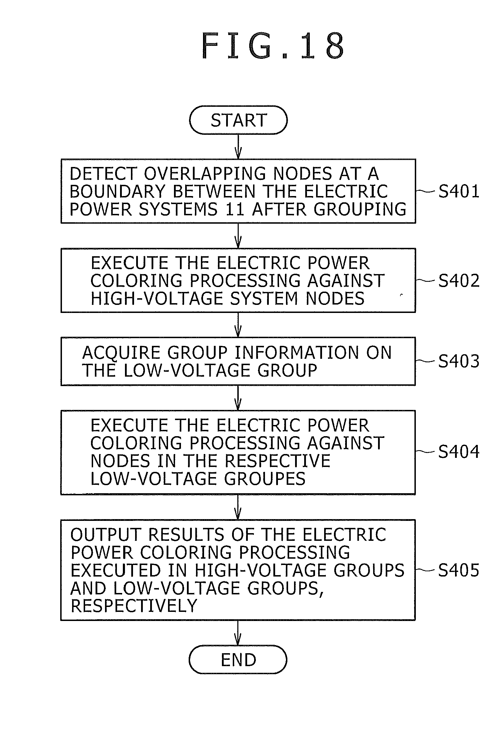

Fig. 18 is a flow chart showing a procedure of a method for executing the electric power coloring processing by a group computed as a result of the processing of Fig. 16. This processing is a processing that can substitute for the electric power coloring processing in the step S103 of Fig. 4.

First, the electric power coloring unit 43 detects overlapping nodes at a boundary between the electric power systems 11 subjected to grouping (step S401). Herein, the overlapping nodes refer to the high-voltage node, and the simulated power generator node. In the example shown in Fig. 17, the nodes 1701, 1702, the nodes 1721, 1722, and the nodes 1731, 1732 are the overlapping nodes, respectively. That is, the nodes actually indicating the same substation, respectively, are the overlapping nodes. Further, the electric power coloring unit 43 regards respective observed values of the high-voltage system nodes 1701, 1721, 1731 (the information shown Figs. 5, 6, respectively) as respective observed values of the simulated power generator nodes 1702, 1722, 1732.

Next, the electric power coloring unit 43 executes the electric power coloring processing against the high-voltage system nodes (step S402). The processing in the step S402 is the same as that in Fig. 7, omitting therefore description thereof. The electric power coloring unit 43 acquires group information on the low-voltage group, computed in the processing shown in Fig. 16, during execution of the electric power coloring processing in the high-voltage group (step S403).

After completion of the electric power coloring processing in the high-voltage group, the electric power coloring init 43 executes the electric power coloring processing against the nodes in the respective low-voltage groups (step S404). The processing in the step S404 is the same as that in Fig. 7, omitting therefore description thereof.

Then, the electric power coloring unit 43 outputs results of the respective electric power coloring in the high-voltage groups, and the low-voltage groups (step S405).

(Summary of the second embodiment)

With the second embodiment, the electric power system is divided into predetermined groups, and the electric power coloring processing is executed by the group, so that it is possible to alleviate a processing burden. Having described the embodiments of the invention as above, it is to be pointed out that the invention be not limited thereto and that various changes and modifications will be apparent to those skilled in the art without departing from the spirit and the cope of the appended claims.

List of Reference signs

1: electric power system monitor-control system
2: load dispatching office
3: data center
4, 4a: power aggregator (power controller)
5: large-scale power-generation system (power generator, power source)
6: solar power-generation system (power generator, power source)
7: wind power-generation system (power generator, power source)
8: electric vehicle
10: communications network
41: data collection unit
42: system-constituent generating unit
43: electric power coloring unit (power-source identifying unit)
44: system control-apparatus computation unit (power-source selection unit)
45: system control command unit
46: display unit 46
47: profile database 47
48: history database
49: system-dividing unit
81: storage cell (power source)
300: parameter setting screen (selection condition included)

**Claims**

1. A method for controlling electric power of an electric power control apparatus in an electric power system with power sources connected thereto, the power sources including at least one power generator, and one storage cell, for selecting the power sources on the basis of a $CO_2$ origination amount representing information concerning a $CO_2$ emission amount, the electric power control apparatus, the method comprising:

   receiving a selection condition of each of apparatuses collecting information via a parameter setting screen on a display unit, thereby acquiring information including a voltage value, and a current value of each of the apparatuses in the electric power system, according to the selection condition;
   acquiring information including a voltage value, and a current value of each of the apparatuses in the electric power system, according to the selection condition;
   computing of which power generator origin electric power stored in the storage cell is on the basis of the voltage value, the current value and admittance with respect to each of power sources;
   computing a $CO_2$ origination amount obtained by multiplying the electric power for every power generator origins by a $CO_2$ origination (emission) coefficient preset by a power generation type; and
   displaying the $CO_2$ origination amount by the power source on the display unit.

2. The method for controlling electric power, according to claim 1, wherein a plurality of the power generators are present in the electric power system, and the electric power control apparatus selects one of the plural power generators, setting respective current values of the power generators other than the selected power generator to 0, thereby executing computation of electric power of the selected power generator origin in electric power stored in the storage cell, the computation being repeated with respect to all the power generators to thereby compute of which power generator origin the electric power stored in the storage cell is.

3. The method for controlling electric power, according to claim 1, wherein the electric power control apparatus computes an output value from the storage cell, for minimizing a $CO_2$ emission amount on the basis of a $CO_2$ origination amount.

4. The method for controlling electric power, according to claim 1, wherein additional apparatuses consuming electric power from the power source are connected to the electric power system, and the electric power control apparatus executes grouping of the apparatuses included in the electric power system under a predetermined condition, thereby executing the method for controlling electric power by a group.

5. A program needed for a computer to execute the method for controlling electric power, according to claim 1.

6. An electric power control apparatus in an electric power system with power sources connected thereto, the power sources including at least one power generator, and one storage cell, for selecting the power sources on the basis of a $CO_2$ origination amount representing information concerning a $CO_2$ emission amount, said electric power control apparatus comprising:

a data collection unit 41 for receiving a selection condition of each of apparatuses collecting information via a setting screen 300 on a display unit 46, thereby acquiring information including a voltage value, and a current value of each of the apparatuses in the electric power system, according to the selection condition;
a power-source identifying unit 43 for computing of which power generator origin electric power stored in the storage cell 81 is on the basis of the voltage value, the current value and admittance with respect to each of power sources, thereby computing a $CO_2$ origination amount obtained by multiplying the electric power for every power generator origins by a $CO_2$ emission coefficient preset by a power generation type, and
a power-source selection) unit 44 for displaying the $CO_2$ origination amount by the power source on the display unit.

7. The electric power control apparatus according to claim 6, wherein additional apparatuses consuming electric power from the power source are connected to the electric power system, and the electric power control apparatus further comprises an electric power system grouping unit for executing grouping of the apparatuses included in the electric power system under a predetermined condition, thereby executing the method for controlling electric power, according to claim 1, for every groups.

# FIG.1

# FIG.2

10

11

ELECTRIC POWER SYSTEM

GW ~12

4

| DATA COLLECTION UNIT | ~41 |

| SYSTEM-CONSTITUENT GENERATING UNIT | ~42 |

| ELECTRIC POWER COLORING UNIT | ~43 |

| SYSTEM CONTROL-APPARATUS COMMUTATION UNIT | ~44 |

| SYSTEM CONTROL COMMAND UNIT | ~45 |

| DISPLAY UNIT | ~46 |

| PROFILE DATABASE | ~47 |

| HISTORY DATABASE | ~48 |

# F I G . 3

**POWER CAPACITY LIST**

| TYPE | TOTAL POWER GENERATION CAPACITY (MW) |
|---|---|
| THERMAL POWER | ○ ○ |
| NUCLEAR POWER | ○ ○ |
| PUMPED-STORAGE POWER | ○ ○ |
| STORAGE CELL | ○ ○ |
| RENEWABLE ENERGY POWER | ○ ○ |
| TOTAL VALUE | |

**EXECUTION POWER GENERATION PATTERN**

| TYPE | ELECTRICITY OUTPUT (MW) | STANDBY POWER (%) |
|---|---|---|
| THERMAL POWER | △ △ | □ □ |
| NUCLEAR POWER | △ △ | □ □ |
| PUMPED-STORAGE POWER | △ △ | □ □ |
| STORAGE CELL | △ △ | □ □ |
| RENEWABLE ENERGY POWER | △ △ | □ □ |
| TOTAL VALUE | | |

OBJECTIVE FUNCTION

□ $CO_2$ MINIMIZATION BY A SUBSTATION (S/S)

☑ $CO_2$ MINIMIZATION BY A CUSTOMER

□ $CO_2$ MINIMIZATION FOR THE SYSTEM ON THE WHOLE

□ MINIMIZATION IN POWER-GENERATION COST

EXCESS/ SHORTAGE ELECTRIC POWER

| CALCULATION | SETTING | EXECUTION BUTTON |

# FIG.4

START

READ ELECTRIC POWER SYSTEM INFORMATION AS THE TARGET OF CALCULATION ─S101

INITIALIZE AN EVALUATION VALUE ON $CO_2$ ORIGINATING ELECTRIC POWER ─S102

EXECUTE A ELECTRIC POWER COLORING PROCESSING ─S103

COMPUTE AN OPTIMUM ELECTRICITY GENERATION AMOUNT ─S104

IS THE PRESENT EVALUATION VALUE GREATER THAN AN EVALUATION VALUE IN A PRECEDING LOOP ? S105

NO

S106

CHANGE A POWER SOURCE HAVING A LARGE EFFECT OF A $CO_2$ ORIGINATING ELECTRIC POWER

YES

DISPLAY $CO_2$ ORIGINATION AMOUNT INFORMATION ─S107

END

# FIG.5

TRANSMISSION LINE - DISTRIBUTION LINE INFORMATION

| INSTALLATION NAME | RESISTANCE PORTION | INDUCTION PORTION | CAPACITY PORTION | TAP RATIO |
|---|---|---|---|---|
| #1―#2 | | | | |
| #2―#3 | | | | |
| #3―#4 | | | | |
| #4―#5 | | | | |
| ⋮ | ⋮ | ⋮ | ⋮ | ⋮ |

# FIG.6

## NODE PARAMETER INFORMATION

| INSTALLATION NAME | THE PRESENCE OR ABSENCE OF CONNECTION WITH A POWER GENERATION | VOLTAGE DESIGNATED VALUE | VOLTAGE INITIAL VALUE | PG | DG | PL | QL | CAPACITOR-REACTOR |
|---|---|---|---|---|---|---|---|---|
| #a | | | | | | | | |
| #b | | | | | | | | |
| #c | | | | | | | | |
| #d | | | | | | | | |
| ⋮ | ⋮ | ⋮ | ⋮ | ⋮ | ⋮ | ⋮ | ⋮ | ⋮ |

# FIG.7

START

READ ELECTRIC POWER SYSTEM INFORMATION — S201

GENERATE AN ADMITTANCE MATRIX — S202

GENERATE A DETERMINANT SHOWN IN FORMULA (1) — S203

COMPUTE VOLTAGE OF RESPECTIVE LOADS ON THE ASSUMPTION THAT ONLY ONE CURRENT SOURCE IS SET FROM AMONG RESPECTIVE POWER GENERATOR NODES — S204

COMPUTE CURRENT FLOW STATES GENERATED BY THE RESPECTIVE POWER GENERATORS BY USE OF THE RESPECTIVE LOAD VOLTAGES, AND THE ADMITTANCE MATRIX — S205

COMPUTE POWER DISTRIBUTION FROM A k-TH POWER GENERATOR TO AN i-TH LOAD BY USE OF FORMULA (2) — S206

COMPUTE A $CO_2$ ORIGINATION AMOUNT — S207

RETURN

# F I G . 8

# F I G . 9

CO$_2$ ORIGINATION AMOUNT INFORMATION

| INSTALLATION NAME | THERMAL POWER ORIGIN | NUCLEAR POWER ORIGIN | RENEWABLE ENERGY ORIGIN |
|---|---|---|---|
| #A | | | |
| #B | | | |
| #C | | | |
| #D | | | |
| ⋮ | ⋮ | ⋮ | ⋮ |

# FIG.10

EACH LINE CORRESPONDS TO EACH STORAGE CELL

# FIG.11

# FIG.12

# FIG.13

33

**HISTORY DATABASE**

31

**ELECTRIC VEHICLE USER ANALYSIS SERVER**

312

34

**PROFILE DATABASE**

USER #3

USER #2

USER #1

1301

NORTH LATITUDE

EAST LONGITUDE

1302

SOC

TIME

1303

NORTH LATITUDE

EAST LONGITUDE

# FIG.14

10 11

ELECTRIC
POWER
SYSTEM

GW ~12

4a

| DATA COLLECTION UNIT | ~ 41 |

| SYSTEM-CONSTITUENT GENERATING UNIT | ~ 42 |

| SYSTEM-DIVIDING UNIT | ~ 49 |

| ELECTRIC POWER COLORING UNIT | ~ 43 |

| SYSTEM CONTROL-APPARATUS COMMUTATION UNIT | ~ 44 |

| SYSTEM CONTROL COMMAND UNIT | ~ 45 |

| DISPLAY UNIT | ~ 46 |

| PROFILE DATABASE | ~ 47 |

| HISTORY DATABASE | ~ 48 |

# FIG.15

# FIG.16

```
                    ( START )

        TURN ALL THE NODE FLAGS TO [0]          ~S301

            SET A GROUP FLAG TO [1]             ~S302

        DECIDE A SYSTEM-SEARCH START NODE       ~S303

        TURN A NODE FLAG OF A NODE AS THE       ~S304
        TARGET OF PROCESSING TO [1]

                      S305
                 DOES
             THE NODE AS THE          YES
          TARGET OF PROCESSING HAS  ──────────►
             THE NEXT NODE
                  ?
                 NO

      REVERT TO THE NODE ONE STEP ABOVE         ~S306

                    S307
             IS THE NODE              NO
         THE SYSTEM-SEARCH START   ──────────►
              NODE ?                              S308
                                             DOES
                YES                      THE NODE AS THE          NO
                                    TARGET OF PROCESSING HAS  ──────►
  S309                              THE NEXT NODE PROVIDED
                                       WITH A NODE FLAG
          EXECUTE GROUPING                  [0] ?
                                                YES
         A GROUP FLAG VALUE =
         THE GROUP FLAG VALUE + 1            ~S310

                    S311
                 ARE
           OTHER SYSTEM-
   YES   SEARCH START NODES WITH
   ◄──── THE NODE FLAG [0]
             PRESENT
                ?
                NO

        GENERATE A HIGH-VOLTAGE SYSTEM         ~S312
        GROUP

                    ( END )
```

# FIG.17

EP 2 590 290 A1

# FIG.18

```
┌─────────────┐
│    START    │
└─────────────┘
        │
        ▼
┌──────────────────────────────────┐
│ DETECT OVERLAPPING NODES AT A    │
│ BOUNDARY BETWEEN THE ELECTRIC    │──S401
│ POWER SYSTEMS 11 AFTER GROUPING  │
└──────────────────────────────────┘
        │
        ▼
┌──────────────────────────────────┐
│ EXECUTE THE ELECTRIC POWER       │
│ COLORING PROCESSING AGAINST      │──S402
│ HIGH-VOLTAGE SYSTEM NODES        │
└──────────────────────────────────┘
        │
        ▼
┌──────────────────────────────────┐
│ ACQUIRE GROUP INFORMATION ON     │
│ THE LOW-VOLTAGE GROUP            │──S403
└──────────────────────────────────┘
        │
        ▼
┌──────────────────────────────────┐
│ EXECUTE THE ELECTRIC POWER       │
│ COLORING PROCESSING AGAINST      │
│ NODES IN THE RESPECTIVE          │──S404
│ LOW-VOLTAGE GROUPES              │
└──────────────────────────────────┘
        │
        ▼
┌──────────────────────────────────┐
│ OUTPUT RESULTS OF THE ELECTRIC   │
│ POWER COLORING PROCESSING        │
│ EXECUTED IN HIGH-VOLTAGE GROUPS  │──S405
│ AND LOW-VOLTAGE GROUPS,          │
│ RESPECTIVELY                     │
└──────────────────────────────────┘
        │
        ▼
┌─────────────┐
│     END     │
└─────────────┘
```

## INTERNATIONAL SEARCH REPORT

| | International application No. |
|---|---|
| | PCT/JP2011/054301 |

A. CLASSIFICATION OF SUBJECT MATTER
*H02J3/32(2006.01)i, H02J3/46(2006.01)i*

According to International Patent Classification (IPC) or to both national classification and IPC

B. FIELDS SEARCHED

Minimum documentation searched (classification system followed by classification symbols)
H02J3/32, H02J3/46

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-54439 A (Toyota Motor Corp.), 06 March 2008 (06.03.2008), paragraphs [0067] to [0084]; fig. 11 to 16 & US 2009/0192655 A1 & EP 2056420 A1 & WO 2008/023536 A1 & KR 10-2009-0055013 A & CN 101507075 A | 1-7 |
| A | JP 2007-185083 A (Toyota Motor Corp.), 19 July 2007 (19.07.2007), entire text; all drawings & US 2009/0096416 A1 & EP 1957312 A & WO 2007/066198 A2 & DE 602006014439 D & CN 101326076 A | 1-7 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 13 May, 2011 (13.05.11) | Date of mailing of the international search report 24 May, 2011 (24.05.11) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/054301

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2009-232670 A  (Osaka Gas Co., Ltd.),<br>08 October 2009 (08.10.2009),<br>paragraphs [0035] to [0045]<br>(Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008067469 A

- JP 2008048500 A

**Non-patent literature cited in the description**

- **DANIEL KIRSCHEN ; RON ALLEN ; GORAN STRBAC.** Contributions of Individual Generators to Loads and Flows. *IEEE Transactions on Power Systems,* 1997, vol. 12 (1), 52-60